Europäisches Patentamt

European Patent Office

Office européen des brevets

(11) Veröffentlichungsnummer: **0 327 671**
**A2**

## (12) EUROPÄISCHE PATENTANMELDUNG

(21) Anmeldenummer: **88114321.8**

(22) Anmeldetag: **02.09.88**

(51) Int. Cl.⁴: **G01F 1/06**

(30) Priorität: **07.10.87 DE 3733862**

(43) Veröffentlichungstag der Anmeldung:
**16.08.89 Patentblatt 89/33**

(84) Benannte Vertragsstaaten:
**AT BE CH DE ES FR GB IT LI NL SE**

(71) Anmelder: **Kobold, Klaus**
**Nordring 22-24**
**D-6238 Hofheim/Ts(DE)**

(72) Erfinder: **Kobold, Klaus**
**Nordring 22-24**
**D-6238 Hofheim/Ts(DE)**

(74) Vertreter: **Keil, Rainer A., Dipl.-Phys. Dr. et al**
**KEIL & SCHAAFHAUSEN Patentanwälte**
**Eysseneckstrasse 31**
**D-6000 Frankfurt am Main 1(DE)**

(54) **Strömungsanzeige- bzw. -messgerät.**

(57) Die Erfindung bezieht sich auf ein Strömungsanzeige- bzw. -meßgerät mit einem in einer im wesentlichen kreiszylindrischen, einen Einlaßkanal und einen Auslaßkanal aufweisenden Strömungskammer eines Strömungsgehäuses drehbar gelagerten Flügelrad, wobei das Flügelrad eine ungerade Anzahl von Flügeln hat. Das Flügelrad ist durch eine durchsichtige Seitenwandung sichtbar. Das Flügelrad kann mit Magneten, Ferritkernen od. dgl. impulsgebenden Elementen versehen sein, über welche eine elektronische Schaltung betätigt wird, so daß das Gerät nicht nur als Strömungsanzeige-, sondern auch als Strömungsmeßgerät dient.

Schnitt A - B

FIG.1

EP 0 327 671 A2

# Strömungsanzeige- bzw. -meßgerät

Die Erfindung bezieht sich auf ein Strömungsanzeige- bzw. -meßgerät mit einem in einer im wesentlichen kreiszylindrischen, einen Einlaßkanal und einen Auslaßkanal aufweisenden Strömungskammer eines Strömungsgehäuses drehbar gelagerten Flügelrad.

Derartige Strömungsanzeige- bzw. -meßgeräte sind an sich bekannt. Sie liefern entweder eine unmittelbare Strömungsanzeige dadurch, daß das sich bei Strömung drehende Flügelrad von außen sichtbar ist, oder sie dienen als Strömungsmeß-, Zähl- oder Dosiergerät, indem das Flügelrad an den Enden der Flügel mit abwechselnd gepolten Magneten ausgerüstet ist, welche in einer ortsfesten Aufnahmespule Spannungsimpulse auslösen. Diese elektrischen Impulse können in einer elektronischen Schaltung verstärkt und gezählt werden, woraus sich die Durchflußmenge bzw. der Durchfluß ermitteln und an einer Anzeigetafel in Liter bzw. Liter/Minute mittels Leuchtdioden anzeigen läßt. Derartige Flügelrad-Strömungsanzeige- bzw. -meßgeräte haben bspw. gegenüber einigen Schwebekörper-Durchflußmessern den Vorteil eines nahezu viskositätsunabhängigen Anzeige- bzw. Meßergebnisses. Die bekannten Geräte dieser Art und jedoch in ihrer Einsatzdauer bei zuverlässiger Funktion verhältnismäßig beschränkt und nehmen als Strömungsmeßgerät mit Gerätegehäuse für die elektronische Schaltung verhältnismäßig viel Platz ein. Ferner ist ihr Strömungswiderstand, da Einlaßkanal und Auslaßkanal in ein und derselben Seitenwand liegen, verhältnismäßig groß.

Hiervon ausgehend ist es Aufgabe der vorliegenden Erfindung, ein Strömungsanzeige- bzw. -meßgerät der eingangs genannten Art so auszubilden, daß es für lange Betriebsdauern voll funktionsfähig und von der gewünschten Meßgenauigkeit für einen weiten Meßbereich ist.

Diese Aufgabe wird erfindungsgemäß im wesentlichen dadurch gelöst, daß das Flügelrad eine ungerade Anzahl von Flügeln hat.

Bei den bekannten Geräten, welche mit Magneten wechselnder Polarität in den Flügeln des Flügelrades ausgestattet sind, ist eine gerade Anzahl von Flügeln erforderlich. Dies kann zu unerwünschten Resonanzen und Anlaufschwierigkeiten des Flügelrades führen. Die Resonanzen führen zu einer erheblichen Beanspruchung der Lagerung des Flügelrades, welche noch dadurch erhöht wird, daß die durch die Magneten bedingte träge Masse des Flügelrades in verhältnismäßig großem radialem Abstand von der Drehachse liegt.

Um ferner den Strömungswiderstand des neuen Gerätes zu verringern, liegen die Mittelpunkte der Einlaßöffnung des Einlaßkanals der Strömungskammer und Auslaßöffnung des Auslaßkanals der Strömungskammer vorzugsweise in einem Umfangsabstand von nur etwa 180° oder weniger, vorzugsweise in einem Umfangsabstand zwischen 180° und 160°.

Dabei stehen bei einer weiteren Ausgestaltung der Erfindung Einlaßkanal und Auslaßkanal vorzugsweise mit auf einander gegenüberliegenden Stirnseiten des Strömungsgehäuses liegenden Gehäuseöffnungen in Strömungsverbindung.

Anlaufschwierigkeiten des Flügelrades können mit Sicherheit dann vermieden werden, wenn wenigstens der Einlaßkanal schräg zur Radialrichtung, vorzugsweise unter einem Winkel zwischen 10° und 80° zur Radialrichtung, in die Mantelfläche der Strömungskammer mündet. Dadurch wird nämlich trotz kompakter Bauweise gewährleistet, daß die Strömung mit Sicherheit mit einer Komponente senkrecht zu einem Flügel des Flügelrades auf diesen Flügel auftrifft.

Auch der Auslaßkanal kann schräg zur Radialrichtung, vorzugsweise unter einem Winkel zwischen 10° und 80° zur Radialrichtung, aus der Mantelfläche der Strömungskammer wegführen. Bei einem so ausgestatteten Gerät kann das zu messende Fluid je nach den Platzverhältnissen entweder von der einen oder der anderen Seite aus durch die Strömungskammer geführt werden.

Um günstige Strömungsverhältnisse zu erzielen, wird weiterhin mit der Erfindung vorgeschlagen, die Gehäuseöffnungen für Einlaßkanal und/oder Auslaßkanal mittig in den einander gegenüberliegenden Stirnseiten des Strömungsgehäuses vorzusehen.

Eine hohe Meßgenauigkeit für einen weiten Meßbereich kann man dann erzielen, wenn gemäß einem weiteren Erfindungsmerkmal in den Einlaßkanal und/oder den Auslaßkanal eine Düsenscheibe einsetzbar, z.B. einschraubbar ist, welche eine Düsenbohrung vorbestimmten Querschnitts aufweist. Die Düsenscheibe ist damit auf einfache Weise gegen eine andere Düsenscheibe mit einem anderen Düsenbohrungsquerschnitt austauschbar.

Dabei führt vorzugsweise die durch die Mittellängsachse der Düsenbohrung bestimmte Strömungsrichtung in der eingesetzten, z.B. eingeschraubten Lage der Düsenscheibe unabhängig von der Richtung des Einlaßkanals schräg zur Radialrichtung, vorzugsweise unter einem Winkel zwischen 10° und 80° zur Radialrichtung, in die (gedachte) Mantelfläche der Strömungskammer, so daß ein Anlaufen des Flügelrades stets sicher gewährleistet ist.

Es wird ferner vorgeschlagen, bei einer weiteren Ausgestaltung der Erfindung die Mittellängsachse des Einlaßkanals bzw. der Düsenbohrung auf die radial äußeren Endabschnitte der vorbeilaufenden Flügel des Flügelrades zu richten, um ein großes Drehmoment auf das Flügelrad auszuüben.

Radial innerhalb der radial äußeren Endabschnitte der Flügel können die Flügel des Flügelrades durchbrochen sein, wodurch die Masse des Flügelrades und der Widerstand beim Verdrehen innerhalb der gefüllten Strömungskammer verringert werden.

Die radial äußeren Endabschnitte der Flügel des Flügelrades haben einen möglichst geringen Abstand von jedenfalls unter einem Millimeter, vorzugsweise unter 0,5 mm von der Mantelfläche der Strömungskammer, so daß sie fast abdichten. Hierdurch wird die Zähl- bzw. Meßgenauigkeit wegen geringer Leckage erhöht.

Damit das Gerät nicht nur als Strömungsanzeige-, sondern auch als Strömungsmeßgerät eingesetzt werden kann, weist das Flügelrad eine Anzahl von im Unfangsabstand voneinander angeordneten Magneten, Ferritkernen od. dgl. impulsgebenden Elementen auf. Im Gegensatz zum Stand der Technik, bei welchen die Magnete an den radial äußeren Enden der Flügel vorgesehen sind, befinden sich erfindungsgemäß die impuls gebenden Elemente vorzugsweise in Nachbarschaft zur Achse des Flügelrades. Hierdurch wird das Trägheitsmoment des Flügelrades erheblich verringert. Die Lager werden dadurch weniger belastet. Außerdem sind die Magnete nicht in den Flügeln oder gar deren Enden vorgesehen, so daß trotz der ungeraden Anzahl von Flügeln eine gerade Anzahl von Magneten mit wechselnder Polarität für das Zusammenwirken mit einem ortsfesten Hall-Sensor oder von Ferritkernen für das Zusammenwirken mit einer ortsfesten Spule vorgesehen werden können.

Die impulsgebenden Elemente sind dabei vorzugsweise in einer Sektorscheibe zusammengefaßt, wobei in jedem Sektor ein impulsgebendes Element angeordnet ist.

Die Sektorscheibe kann ein Teil der Nabe des Flügelrades bzw. mit dieser drehfest verbunden sein.

Ferner ist es von Vorteil, wenn die impulsgebenden Elemente benachbart einer flachseitigen Seitenwand des Strömungsgehäuses angeordnet sind, nämlich benachbart derjenigen Seitenwand, hinter welcher der Hall-Sensor, die Spule oder ein Näherungssensor zur Erzeugung der elektrischen Impulse vorgesehen ist. Auf diese Weise erhält man verhältnismäßig große elektrische Impulse.

Das Flügelrad kann zwar auf einer drehfesten Achse angeordnet sein. Hierfür bedarf es jedoch einer hinreichenden Schmierung. Vorteilhafter ist es, wenn erfindungsgemäß das Flügelrad drehfest auf einer Welle aufgenommen ist, welche in den beiden einander gegenüberliegenden flachseitigen Seitenwänden des Strömungsgehäuses drehbar gelagert ist.

Die Lagerung für die Welle wird gemäß einem weiteren Erfindungsmerkmal von einem in einer Seitenwand axial festliegenden und einem in der anderen Seitenwand, vorzugsweise von außen, axial verstellbaren Lagerelement gebildet. Auf diese Weise ist eine schnelle und sichere Montage des Flügelrades bei langdauernder Funktionsfähigkeit gewährleistet.

Der einfachen Montage dient es auch, wenn wenigstens eine der flachseitigen Seitenwände des Strömungsgehäuses wenigstens teilweise von einem abnehmbar befestigten Gehäusedeckel gebildet ist, wie dies an sich bekannt ist.

Wenigstens eine der flachseitigen Seitenwände, die parallel zu dem Flügelrad liegen und vorzugsweise die Lagerelemente für das Flügelrad aufnehmen, bzw. wenigstens einer der Gehäusedeckel, welche die gleiche Lage und Funktion haben, besteht aus durchsichtigem Material, so daß das sich bei Vorliegen einer Strömung drehende Flügelrad von außen sichtbar ist und damit eine Strömungsanzeige ohne elektronische Schaltung gegeben wird. Sind beide Seitenwände bzw. Gehäusedeckel durchsichtig, kann von beiden Seiten aus optisch festgestellt werden, ob in der Leitung, in welche das Strömungsgehäuse eingeschaltet ist, eine Strömung herrscht oder nicht.

Eine zuverlässige Abdichtung des Strömungsgehäuses erhält man bei einfacher Montage dann, wenn die Gehäusedeckel mit einem Ansatz in eine Aussparung der Seitenwände hineinragen und dort mittels eines Dichtungsringes radial abgedichtet sind.

Das erfindungsgemäße Strömungsgehäuse kann Anschlußmuffen für den Einlaßkanal bzw. den Auslaßkanal aufweisen, die entweder einen Rohranschluß über Gewinde oder über Flansch zulassen. Um einen einfachen Einbau eines Rohranschlusses über Gewinde zuzulassen, sind sie an ihrem äußeren Ende bspw. mit einem Innengewinde ausgestatteten Anschlußmuffen mit einem Muffenabschnitt mittels Dichtungsring in eine gewindelose Bohrung des Einlaßkanals bzw. Auslaßkanals dichtend eingesetzt und der Muffenabschnitt hat einen Einstich mit rundem Nutgrund, dem ein entsprechender von einem Abschnitt wenigstens einer von außen zugänglichen Gehäusebohrung gebildeter Einstich der gewindelosen Bohrung gegenüberliegt. In die jeweilige Gehäusebohrung ist dann ein z.B. als Gewindestift ausgebildeter Sicherungsstift eingesetzt. Auf diese Weise werden die Anschlußmuffen axial unverrückbar, jedoch drehbar an dem Strömungsgehäuse gehalten, wodurch auf einfache Weise eine Schraubverbindung zu der Anschlußleitung hergestellt werden kann. Auch während des Betriebes des Gerätes können die Anschlußmuffen relativ zu dem Strömungsgehäuse bewegt werden, ohne daß die Dichtigkeit der Anschlußmuffen beeinträchtigt wird. Hiermit wird ein weiterer konstruktiver und funktioneller Vorteil erreicht.

Um ein möglichst kompaktes Gerät zu erhalten, ist in weiterer Ausgestaltung das Strömungsgehäuse in einer Aussparung eines Gerätegehäuses eingepaßt, welches für die Aufnahme der elektronischen Schaltung bestimmt ist.

Die äußere Gestalt des Strömungsgehäuses ist dabei vorzugsweise im wesentlichen quaderförmig ausgebildet und in der in das Gerätegehäuse eingesetzten Lage des Strömungsgehäuses fluchten vorzugsweise die freiliegenden Außenflächen des Strömungsgehäuses mit den angrenzenden Außenflächen des Gerätegehäuses. Dadurch wird ein kompaktes Gesamtgerät mit ineinander übergehenden Außenflächen geschaffen. Soll lediglich eine Strömungsanzeige erfolgen, kann das Strömungsgehäuse mit Flügelrad und Anschlußmuffen selbständig verwendet werden. Soll das Gerät aber (auch) als Strömungsmeßgerät dienen, wird es somit in das Gerätegehäuse des Gesamtgehäuses integriert. Diese Integration ist auch nachträglich möglich, wenn von einer rein visuellen Anzeige einer Strömung eine Messung der Durchflußmenge bzw. des Durchflusses mittels der Magnete, Ferrite od. dgl. impulsgebenden Elemente und einer elektronischen Schaltung erfolgen und eine Anzeige über Leuchtdioden und/oder Digitalsignale erfolgen soll.

Bei der Integration des Strömungsgehäuses in das Gerätegehäuse wird insbesondere vorgeschlagen, daß die Außenfläche der einen flächenseitigen Seitenwand des Strömungsgehäuses mit der frontalen Außenfläche des Gerätegehäuses fluchtet. Die betreffende flächenseitige Seitenwand des Strömungsgehäuses bzw. der sie bildende Gehäusedeckel sind dabei vorzugsweise aus durchsichtigem Material, so daß das Gerät nicht nur zur Durchflußmengenmessung bzw. Durchflußmessung, sondern auch zur bloßen visuellen Strömungsanzeige verwendet werden kann.

Da die elektronische Schaltung Temperaturen über 100°C nicht ausgesetzt werden sollte, die zu messenden Fluide aber z.T. höhere Temperaturen haben können, wird bei einer Integration des Strömungsgehäuses in das Gerätegehäuse weiterhin vorgeschlagen, daß das Strömungsgehäuse in der in das Gerätegehäuse eingesetzten Lage gegen das Gerätegehäuse thermisch isoliert ist, bspw. durch Zwischenlage von thermisch isolierenden Platten.

Um das erfindungsgemäße Gerät einfach auf unterschiedliche Meßbereiche umstellen zu können, kann die frontale Außenfläche des Gerätegehäuses mit einer auswechselbaren Skalenfeldplatte ausgestattet sein.

Eine einfache Herstellung und Montage des Gerätes wird dadurch gewährleistet, daß das Gerätegehäuse als Abschnitt eines Stranghohlprofils ausgebildet ist.

Damit ein Überschreiten der maximalen Temperatur in den Gerätegehäuse möglichst verhindert wird, können die Außenflächen des Gerätegehäuses profiliert, z.B. mit Rippen oder Nuten ausgestaltet sein, welche in Stranprofillängsrichtung verlaufen, so daß die einzelnen Gerätegehäuse einfach von dem fortlaufenden Hohlprofilstrang abgeschnitten werden können.

Weitere Ziele, Merkmale, Vorteile und Anwendungsmöglichkeiten der vorliegenden Erfindung ergeben sich aus der nachfolgenden Beschreibung von Ausführungsbeispielen anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

Es zeigen:

Fig. 1 eine Ausführungsform des erfindungsgemäßen Gerätes im Vertikalschnitt A-B von Fig. 3,

Fig. 2 das Gerät gemäß Fig. 1 in einem Horizontalschnitt C-D von Fig. 3,

Fig. 3 einen Vertikalschnitt E-F des erfindungsgemäßen Gerätes gemäß Fig. 2,

Fig. 4 eine Schnittdarstellung entsprechend Fig. 1 einer anderen Ausführungsform eines erfindungsgemäßen Gerätes (Schnitt A-B von Fig. 6),

Fig. 5 einen Horizontalschnitt C-D gemäß Fig. 6 des erfindungsgemäßen Gerätes von Fig. 4,

Fig. 6 einen Vertikalschnitt C-D von Fig. 5 des erfindungsgemäßen Gerätes gemäß Fig. 4,

Fig. 7 ein als Strömungsmeßgerät ausgebildetes Gerät im Vertikalschnitt A-B von Fig. 9,

Fig. 8 einen Horizontalschnitt E-F von Fig. 8 des erfindungsgemäßen Gerätes gemäß Fig. 7,

Fig. 9 einen Vertikalschnitt E-F von Fig. 8 des erfindungsgemäßen Gerätes von Fig. 7,

Fig. 10 einen Vertikalschnitt A-B entsprechend Fig. 7 für eine andere Ausführungsform eines erfindungsgemäßen, als Strömungsmeßgerät ausgebildeten Gerätes,

Fig. 11 einen Horizontalschnitt C-D von Fig. 12 eines erfindungsgemäßen Gerätes von Fig. 10,

Fig. 12 einen Vertikalschnitt E-F von Fig. 11 eines erfindungsgemäßen Gerätes nach Fig. 10, und

Fig. 13 eine Schrägansicht eines erfindungsgemäßen Strömungsanzeige- und -meßgerätes, bei welchem das Strömungsgehäuse in eine Aussparung des Gerätegehäuses zur Schaffung eines Kompaktgerätes eingesetzt ist.

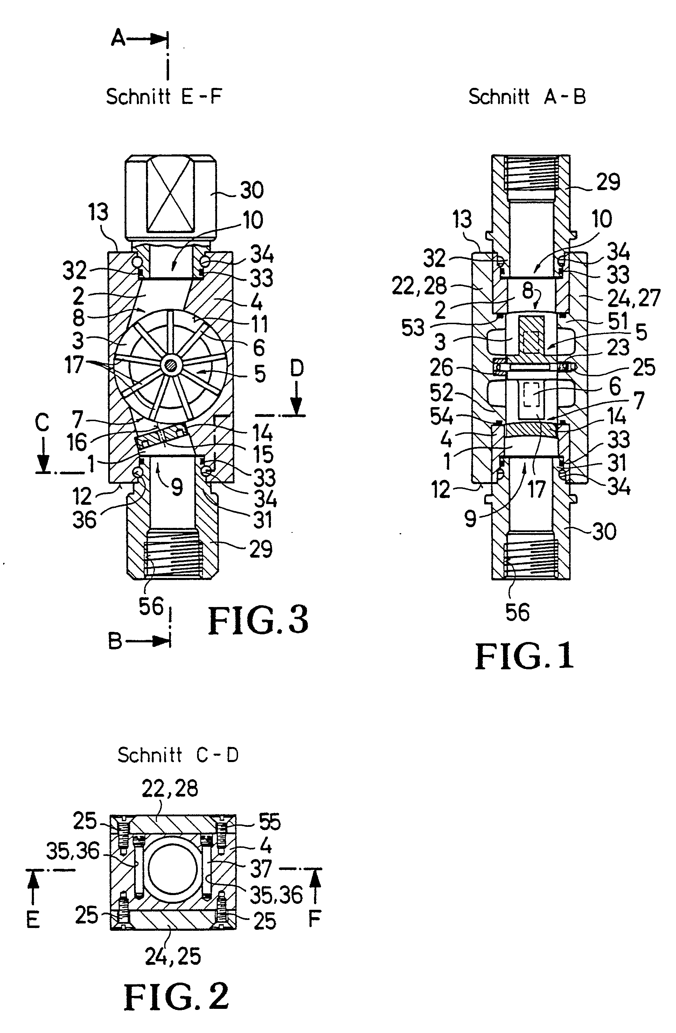

Die Fig. 1 - 3 veranschaulichen ein erfindungsgemäßes Strömungsanzeigegerät, bestehend aus einem Strömungsgehäuse 4 mit einer im wesentlichen kreiszylindrischen Strömungskammer 3, in welcher ein Flügelrad 5 drehbar gelagert ist. Die Strömungskammer 3 ist mit einem Einlaßkanal 1 und einem Auslaßkanal 2 ausgestattet. Die Mittelpunkte der Einlaßöffnung 7 des Einlaßkanals 1 der Strömungskammer 3 der und Auslaßöffnung 8 des Auslaßkanals 2 der Strömungskammer 3, liegen in einem Umfangsabstand voneinander, welcher kleiner als 180˚ ist. Einlaßkanal 1 und Auslaßkanal 2 stehen mit auf einander gegenüberliegenden Stirnseiten 12, 13 des Strömungsgehäuses 4 liegenden Gehäuseöffnungen 9, 10 in Strömungsverbindung. Die Gehäuseöffnungen 9, 10 für Einlaßkanal 1 und Auslaßkanal 2 liegen mittig in den einander gegenüberliegenden Stirnseiten 12, 13 des Strömungsgehäuses 4. Von der Gehäuseöffnung 9 führt der Einlaßkanal 1 schräg zur Radialrichtung mittels der Einlaßöffnung 7 in die Mantelfläche 11 des Strömungskanals 3.

Der Auslaßkanal 2 führt schräg zur Radialrichtung von der Auslaßöffnung 8 aus der Mantelfläche 11 der Strömungskammer 3 weg. In den mit einem Innengewinde ausgestatteten Einlaßkanal 1 ist eine mit einem Außengewinde ausgestattete Düsenscheibe 14 eingeschraubt, welche eine Düsenbohrung 15 vorbestimmten Querschnitts aufweist. Die Düsenscheibe 14 hat außenseitig zwei Eingriffsöffnungen für ein Drehwerkzeug. Dabei ist die Mittellängsachse 16 der Düsenbohrung 15 wie die des Einlaßkanals 1 selbst auf die radial äußeren Endabschnitte 17 der an der Einlaßöffnung 7 vorbeilaufenden Flügel 6 des Flügelrades 5 gerichtet. Dabei können die Flügel 6 des Flügelrades 5, wie in Fig. 1 angedeutet, auch durchbrochen sein. Die radial äußeren Endabschnitte 17 der Flügel 6 des Flügelrades 5 halten einen möglichst geringen Abstand von der Mantelfläche 11 der Strömungskammer 3, so daß eine möglichst geringe Fluidleckage an der Mantelfläche 11 stattfindet.

Das Flügelrad 5 ist drehfest auf einer Welle 23 aufgenommen, welche in den beiden einander gegenüberliegenden flachseitigen Seitenwänden 22, 24 des Strömungsgehäuses 4 drehbar gelagert ist. Die Lagerung für die Welle 23 ist von einem in einer Seitenwand 22 axial festliegenden und einer in der anderen Seitenwand 24 von außen axial verstellbaren Lagerelement 25, 26 gebildet. Beide flachseitigen Seitenwände 22, 24 des Strömungsgehäuses 4 sind je von einem abnehmbar mittels Schrauben 55 befestigten Gehäusedeckel 17, 28 gebildet. Die Gehäusedeckel 27, 28 können aus durchsichtigem Material bestehen. Die Gehäusedeckel 27, 28 ragen mit einem Ansatz 51, 52, welche die Lagerelemente 25, 26 für die Welle 23 des Flügelrades 5 aufnehmen, in eine Aussparung der Seitenwände 22, 24 hinein. Dort sind die Ansätze 51, 52 mittels eines Dichtungsringes 53, 54 radial gegen das Strömungsgehäuse 4 abgedichtet.

Einlaßkanal 1 und Auslaßkanal 2 sind mit Anschlußmuffen 29, 30 versehen. Die Anschlußmuffen 29, 30 sind mit einem Muffenabschnitt 31, 32 mittels Dichtungsring 33 in eine gewindelose Bohrung des Einlaßkanals 1 bzw. Auslaßkanals 2 dichtend eingesetzt. Der jeweilige Muffenabschnitt 31, 32 weist einen Einstich 34 mit rundem Nutgrund auf, dem zwei entsprechende, von je einem Abschnitt zweier von außen zugängliche Gehäusebohrungen 35 gebildete Einstiche 36 der gewindelosen Bohrung des Einlaßkanals 1 bzw. des Auslaßkanals 2 gegenüberliegt. In die Gehäusebohrungen 35 ist je ein als Gewindestift ausgebildeter Sicherungsstift 37 eingesetzt. Auf diese Weise sind die Anschlußmuffen 29, 30 axial festgelegt, jedoch gegenüber dem Strömungsgehäuse 4 drehbar.

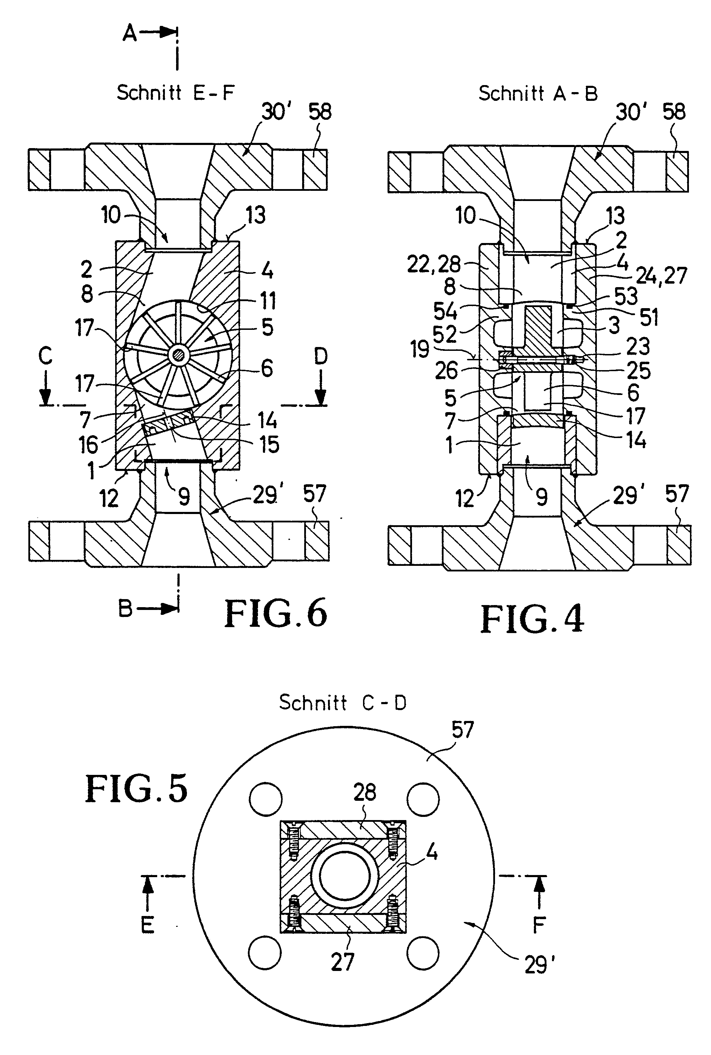

Das erfindungsgemäße Strömungsanzeigegerät gemäß Fig. 4 - 6 unterscheidet sich von dem in den Fig. 1 - 3 im wesentlichen nur dadurch, daß die Anschlußmuffen 29′, 30′ für Einlaßkanal 1 und Auslaßkanal 2 kein Innengewinde 56 für eine Rohrverschraubung aufweisen, sondern einen Flansch 57, 58 für eine Flanschverbindung. Außerdem sind die Anschlußmuffen 29′, 30′ in diesem Fall mit dem Strömungsgehäuse 4 verschweißt.

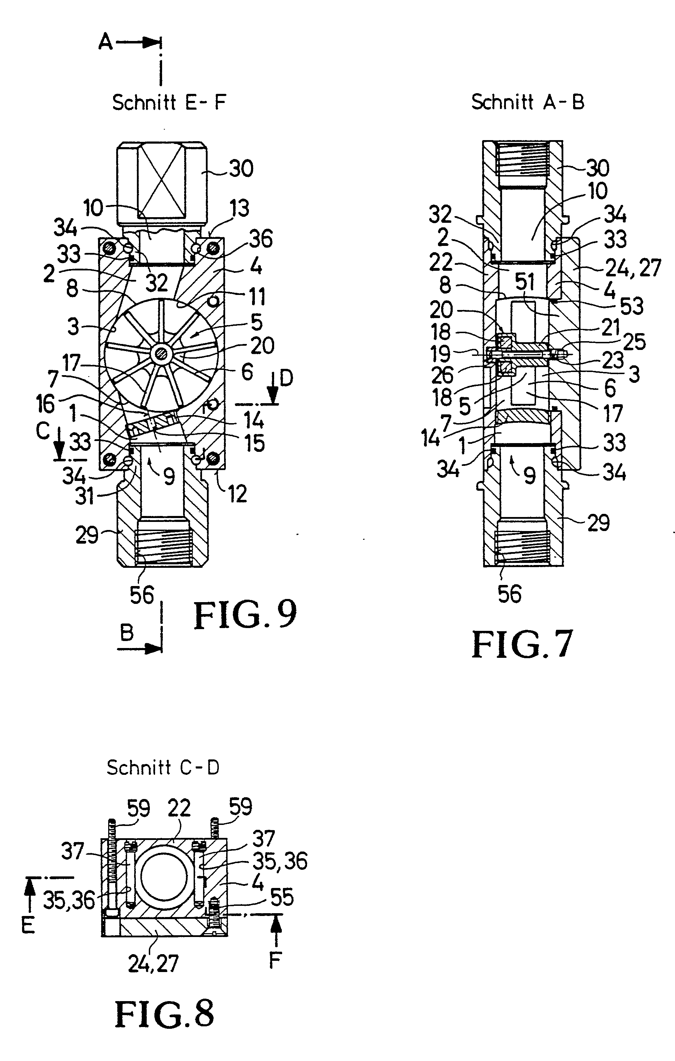

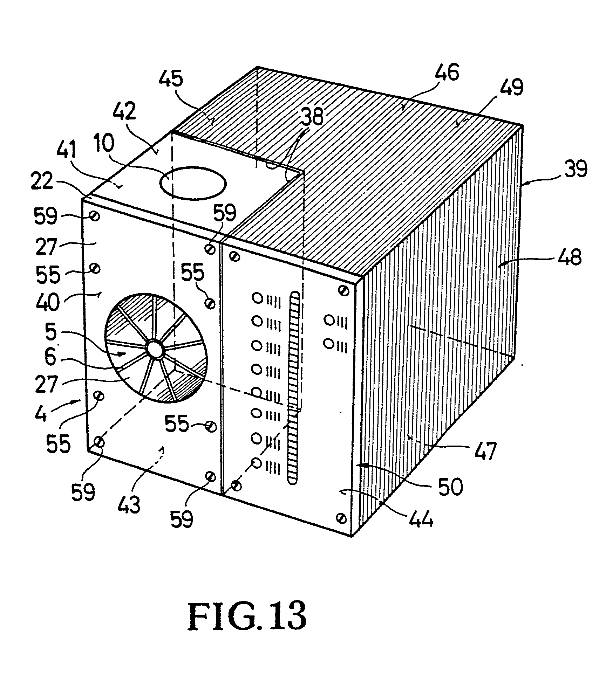

Die Ausführungsform des Gerätes gemäß den Fig. 7 - 9 ähnelt derjenigen aus den Fig. 1 - 3. In den Fig. 7 - 9 ist das Gerät jedoch als Durchflußmeßgerät ausgestattet, welches nicht nur eine optische Strömungsanzeige aufgrund des durchsichtigen Materials des einen Gehäusedeckels 27 bietet (ein Gehäusedeckel 28 fehlt hier), sondern auch noch eine elekrische Meßanzeige für die Durchflußmenge bzw. den Durchfluß. Zu diesem Zweck weist das Flügelrad 5 eine Anzahl von im Umfangsabstand voneinander angeordneten Magneten, Ferritkernen od. dgl. impulsgebenden Elementen 18 auf, welche in unmittelbarer Nachbarschaft zur Achse 19 des Flügelrades 5 in einer z.B. aus Kunststoff bestehenden Sektorscheibe 20 zusammengefaßt und eingeschlossen sind, wobei in jedem Sektor ein impulsgebendes Element 18 angeordnet ist. Die Sektorscheibe 20 bildet einen Teil der Nabe 21 des Flügelrades 5. Die impulsgebenden Elemente 18 sind unmittelbar benachbart der flachseitigen Seitenwand 22 des Strömungsgehäuses 4 angeordnet, an dessen Außenseite sich ein nicht dargestellter Hall-Generator, eine nicht dargestellte Spule oder ein nicht dargestelltes Näherungsschaltelement für die Erzeugung eines elektrischen Spannungs- oder Stromsignals angeordnet ist. Das Strömungsgehäuse 4 kann, wie aus den Fig. 8 und 13 ersichtlich, mittels Schrauben 59 in der Aussparung 38 eines Gerätegehäuses 39 festgelegt sein.

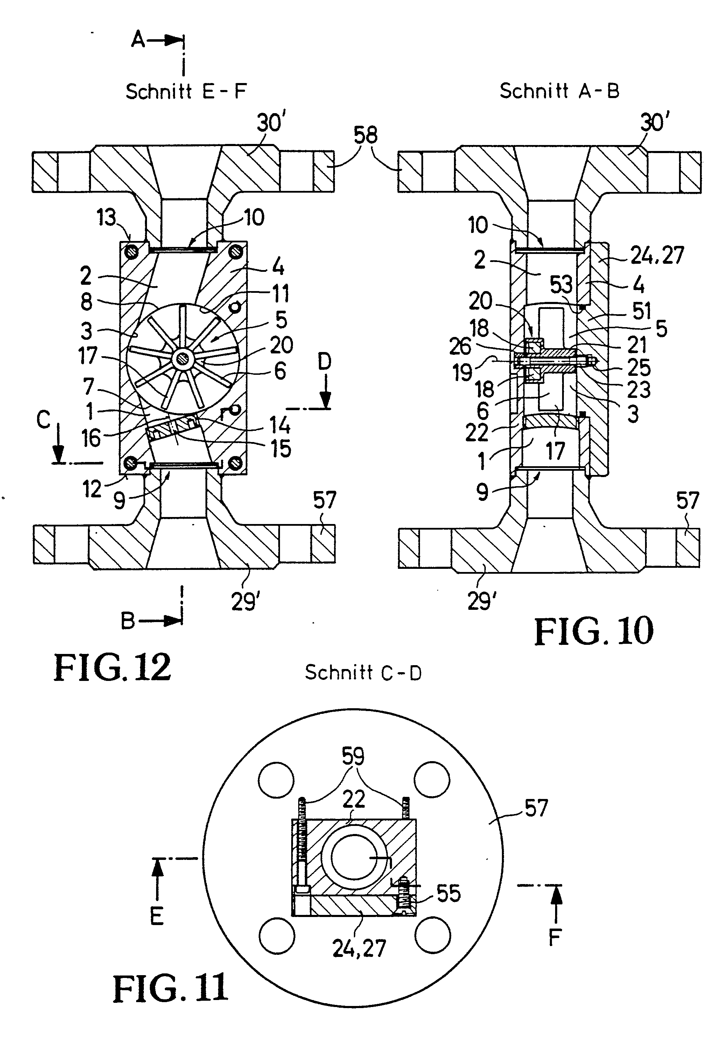

Die Ausführungsform eines erfindungsgemäßen Gerätes gemäß den Fig. 10 - 12 entspricht im wesentlichen derjenigen nach den Fig. 7 - 9. Hierbei sind jedoch wieder die für eine Gewindeverbindung vorgesehenen Anschlußmuffen 29, 30 durch Anschlußmuffen 29' und 30' mit Flanschen ersetzt, die mit dem Strömungsgehäuse 4 verschweißt sind, ähnlich der Ausführungsform der Fig. 4 - 6. Im übrigen ist der Aufbau identisch.

Fig. 13 zeigt in Schrägansicht ein Gesamtgerät mit Strömungsgehäuse 4, welches in die Aussparung 38 des Gerätegehäuses 39 eingepaßt und mit diesem zu einer kompakten Gesamtform integriert ist. Die Anschlußmuffen 29, 30 bzw. 29', 30' sind nicht dargestellt. Der Gehäusedeckel 27 besteht aus durchsichtigem Material, so daß das Gerät sowohl als Strömungsanzeigegerät als auch als Strömungsmeßgerät eingesetzt werden kann mit Hilfe der elektronischen Schaltung, die in dem Gerätegehäuse 39 untergebracht ist. Die Aussparung 38 des Gerätegehäuses 39 ist entsprechend der Außenform des Strömungsgehäuses 4 quaderförmig derart ausgebildet, daß die freiliegenden Außenflächen 40 - 43 des Strömungsgehäuses 4 mit den angrenzenden Außenflächen 44 - 47 des Gerätegehäuses 39 fluchten. Die Außenfläche 40 der einen flachseitigen Seitenwand 22 des Strömungsgehäuses 4 fluchtet insbesondere mit der frontalen Außenfläche 44 des Gerätegehäuses 39. Das Strömungsgehäuse 4 ist ferner gegenüber den Gerätegehäuse 39 thermisch isoliert, indem wärmeisolierende Platten zwischen das Strömungsgehäuse 4 und das Gerätegehäuse 39 gelegt sind. Die frontale Außenfläche 44 des Gerätegehäuses 39 ist mit einer auswechselbaren Skalenfeldplatte 50 ausgestattet, von welcher aus die analoge oder digitale Anzeige der Durchflußmenge bzw. des Durchflusses z.B. mittels Leuchtdioden erfolgt. Hierbei können bspw. auch Zusatzfunktionen, wie Erreichen bzw. Überschreiten eines vorgegebenen Grenzwertes, der Betriebszustand (Ein/Aus) des Gerätes, der Signalbereich (in mA) angezeigt werden, sowie Betätigungsorgane für die Einstellung des Meßbereiches u. dgl. vorgesehen sein.

Das Gerätegehäuse 39 ist als Abschnitt eines Stranghohlprofils ausgebildet und seine Außenflächen 40 - 49 sind profiliert, z.B. mit Rippen oder Nuten, welche in Hohlprofilstranglängsrichtung verlaufen.

Bezugszeichenliste:

1 Einlaßkanal
2 Auslaßkanal
3 Strömungskammer
4 Strömungsgehäuse
5 Flügelrad
6 Flügel
7 Einlaßöffnung
8 Auslaßöffnung
9 Gehäuseöffnung
10 Gehäuseöffnung
11 Mantelfläche
12 Stirnseite
13 Stirnseite
14 Düsenscheibe
15 Düsenbohrung
16 Mittellängsachse
17 Endabschnitte
18 inpulsgebende Elemente
19 Achse
20 Sektorscheibe
21 Nabe
22 Seitenwand
23 Welle
24 Seitenwand
25 Lagerelement
26 Lagerelement
27 Gehäusedeckel
28 Gehäusedeckel
29, 29' Anschlußmuffen
30 30' Anschlußmuffen
31 Muffenabschnitt
32 Muffenabschnitt
33 Dichtungsring
34 Einstich
35 Gehäusebohrung
36 Einstich
37 Sicherungsstift
38 Aussparung
39 Gerätegehäuse
40 Außenfläche
41 Außenfläche
42 Außenfläche
43 Außenfläche
44 Außenfläche
45 Außenfläche
46 Außenfläche
47 Außenfläche
48 Außenfläche
49 Außenfläche
50 Skalenfeldplatte
51 Ansatz
52 Ansatz
53 Dichtungsring
54 Dichtungsring
55 Schrauben
56 Innengewinde
57 Flansch
58 Flansch
59 Schrauben

## Ansprüche

1. Strömungsanzeige- bzw. -meßgerät mit einem in einer im wesentlichen kreiszylindrischen, einen Einlaßkanal (1) und einen Auslaßkanal (2) aufweisenden Strömungskammer (3) eines Strömungsgehäuses (4) drehbar gelagerten Flügelrad (5), dadurch gekennzeichnet, daß das Flügelrad (5) eine ungerade Anzahl von Flügeln (6) hat.

2. Gerät nach Anspruch 1, dadurch gekennzeichnet, daß die Mittelpunkte der Einlaßöffnung (7) des Einlaßkanals (1) der Strömungskammer (3) und der Auslaßöffnung (8) des Auslaßkanals (2) der Strömungskammer (3) in einem Umfangsabstand von etwa 180° oder weniger, vorzugsweise in einem Umfangsabständ zwischen 180° und 160° liegen.

3. Gerät nach Anspruch 1 oder 2, dadurch gekennzeichnet, daß Einlaßkanal (1) und Auslaßkanal (2) mit auf einander gegenüberliegenden Stirnseiten (12, 13) des Strömungsgehäuses (4) liegenden Gehäuseöffnungen (9, 10) in Strömungsverbindung stehen.

4. Gerät nach einem der Ansprüche 1 bis 3, dadurch gekennzeichnet, daß wenigstens der Einlaßkanal (1) schräg zur Radialrichtung, vorzugsweise unter einem Winkel zwischen 10 und 80° zur Radialrichtung, in die Mantelfläche (11) der Strömungskammer (3) mündet.

5. Gerät nach einem der Ansprüche 1 bis 4, dadurch gekennzeichnet, daß der Auslaßkanal (2) schräg zur Radialrichtung, vorzugsweise unter einem Winkel zwischen 10° und 80° zur Radialrichtung, aus der Mantelfläche (11) der Strömungskammer (3) wegführt.

6. Gerät nach einem der Ansprüche 1 bis 5, dadurch gekennzeichnet, daß die Gehäuseöffnungen (9, 10) für Einlaßkanal (1) und/oder Auslaßkanal (2) mittig in den einander gegenüberliegenden Stirnseiten (12, 13) des Strömungsgehäuses (4) liegen.

7. Gerät nach einem der Ansprüche 1 bis 6, dadurch gekennzeichnet, daß in dem Einlaßkanal (1) und/oder dem Auslaßkanal (2) eine Düsenscheibe (14) einsetzbar, z.B. einschraubbar ist, welche eine Düsenbohrung (15) vorbestimmten Querschnitts aufweist.

8. Gerät nach Anspruch 7, dadurch gekennzeichnet, daß die durch die Mittellängsachse (16) der Düsenbohrung (15) bestimmte Strömungsrichtung in der eingesetzten, z.B. eingeschraubten Lage der Düsenscheibe (14) schräg zur Radialrichtung, vorzugsweise unter einem Winkel zwischen 10° und 80° zur Radialrichtung in die (gedachte) Mantelfläche (11) der Strömungskammer (3) führt.

9. Gerät nach einem der Ansprüche 1 bis 8, dadurch gekennzeichnet, daß die Mittellängsachse (16) des Einlaßkanals (1) bzw. der Düsenbohrung (15) auf die radial äußeren Endab schnitte (17) der vorbeilaufenden Flügel (6) des Flügelrades (5) gerichtet ist.

10. Gerät nach einem der Ansprüche 1 bis 9, dadurch gekennzeichnet, daß die Flügel (6) des Flügelrades (5) durchbrochen sind.

11. Gerät nach einem der Ansprüche 1 bis 10, dadurch gekennzeichnet, daß die radial äußeren Endabschnitte (17) der Flügel (6) des Flügelrades (5) einen geringen Abstand von jedenfalls unter einem Millimeter, vorzugsweise unter 0,5 mm von der Mantelfläche (11) der Strömungskammer (3) halten.

12. Gerät nach einem der Ansprüche 1 bis 11, dadurch gekennzeichnet, daß das Flügelrad (5) eine Anzahl von im Umfangsabstand voneinander angeordneten Magneten, Ferritkernen od. dgl. impulsgebenden Elementen (18) aufweist.

13. Gerät nach Anspruch 12, dadurch gekennzeichnet, daß die impulsgebenden Elemente (18) in Nachbarschaft zur Achse (19) des Flügelrades (5) angeordnet sind.

14. Gerät nach Anspruch 12 oder 13, dadurch gekennzeichnet, daß die impulsgebenden Elemente (18) in einer Sektorscheibe (20) zusammengefaßt sind, wobei in jedem Sektor ein impulsgebendes Element (18) angeordnet ist.

15. Gerät nach Anspruch 14, dadurch gekennzeichnet, daß die Sektorscheibe (20) einen Teil der Nabe (21) des Flügelrades (5) bildet bzw. mit dieser drehfest verbunden ist.

16. Gerät nach einem der Ansprüche 12 bis 15, dadurch gekennzeichnet, daß die impulsgebenden Elemente (18) benachbart einer flachseitigen Seitenwand (12) des Strömungsgehäuses (4) angeordnet sind.

17. Gerät nach einem der Ansprüche 1 bis 16, dadurch gekennzeichnet, daß das Flügelrad (5) drehfest auf einer Welle (21) aufgenommen ist, welche in den beiden einander gegenüberliegenden flachseitigen Seitenwänden (22, 24) des Strömungsgehäuses (4) drehbar gelagert ist.

18. Gerät nach Anspruch 17, dadurch gekennzeichnet, daß die Lagerung für die Welle (23) von einem in einer Seitenwand (22) axial festliegenden und einem in der anderen Seitenwand (24), vorzugsweise von außen, axial verstellbaren Lagerelement (25, 26) gebildet ist.

19. Gerät nach einem der Ansprüche 1 bis 18, dadurch gekennzeichnet, daß wenigstens eine der flachseitigen Seitenwände (22, 24) des Strömungsgehäuses (4) wenigstens teilweise von einem abnehmbar befestigten Gehäusedeckel (27, 28) gebildet ist.

20. Gerät nach einem der Ansprüche 1 bis 19, dadurch gekennzeichnet, daß wenigstens eine der flachseitigen Seitenwände (22, 24) bzw. wenigstens eine der Gehäusedeckel (27, 28) aus durchsichtigem Material besteht.

21. Gerät nach Anspruch 19 oder 20, dadurch gekennzeichnet, daß die Gehäusedeckel (27, 28) mit einem Ansatz (51, 52) in eine Aussparung der Seitenwände (22, 24) hineinragen und dort mittels eines Dichtungsringes (53, 54) radial abgedichtet sind.

22. Gerät nach einem der Ansprüche 1 bis 21, mit Anschlußmuffen (29, 30) für den Einlaßkanal (1) bzw. den Auslaßkanal (2), dadurch gekennzeichnet, daß die Anschlußmuffen (29, 30) mit einem Muffenabschnitt (31, 32) mittels Dichtungsring (33) in eine gewindelose Bohrung des Einlaßkanals (1) bzw. Auslaß kanals (2) dichtend eingesetzt sind, und daß der Muffenabschnitt (31, 32) einen Einstich (34) mit rundem Nutgrund aufweist, dem ein entsprechender, von einem Abschnitt wenigstens einer von außen zugänglichen Gehäusebohrung (35) gebildeter Einstich (36) der gewindelosen Bohrung gegenüberliegt, und daß in die jeweilige Gehäusebohrung (35) ein z.B. als Gewindestift ausgebildeter Sicherungsstift (37) eingesetzt ist.

23. Gerät nach einem der Ansprüche 1 bis 22, dadurch gekennzeichnet, daß das Strömungsgehäuse (4) in eine Aussparung (38) eines Gerätegehäuses (39) eingepaßt ist.

24. Gerät nach Anspruch 23, dadurch gekennzeichnet, daß die äußere Gestalt des Strömungsgehäuses (4) im wesentlichen quaderförmig ausgebildet ist und in der in das Gerätegehäuse (39) eingesetzten Lage des Strömungsgehäuses (4) die freiliegenden Außenflächen (40 - 43) des Strömungsgehäuses (4) mit den angrenzenden Außenflächen (44 - 47) des Gerätegehäuses (39) fluchten.

25. Gerät nach Anspruch 23 oder 24, dadurch gekennzeichnet, daß die Außenfläche (40) der einen flachseitigen Seitenwand (22) des Strömungsgehäuses (4) mit der frontalen Außenfläche (44) des Gerätegehäuses (39) fluchtet.

26. Gerät nach einem der Ansprüche 23 bis 25, dadurch gekennzeichnet, daß das Strömungsgehäuse (4) in der in das Gerätegehäuse (39) eingesetzten Lage gegen das Gerätegehäuse (39) thermisch isoliert ist.

27. Gerät nach einem der Ansprüche 23 bis 26, dadurch gekennzeichnet, daß die frontale Außenfläche (44) des Gerätegehäuses (39) mit einer auswechselbaren Skalenfeldplatte (50) ausgestattet ist.

28. Gerät nach einem der Ansprüche 23 bis 27, dadurch gekennzeichnet, daß das Gerätegehäuse (39) als Abschnitt eines Stranghohlprofils ausgebildet ist.

29. Gerät nach einem der Ansprüche 23 bis 28, dadurch gekennzeichnet, daß die Außenflächen (40 - 49) des Gerätegehäuses (39) profiliert, z.B. mit Rippen oder Nuten ausgestattet sind.

EP 0 327 671 A2

## Schnitt E - F

A →

**FIG.3**

## Schnitt A - B

**FIG.1**

## Schnitt C - D

**FIG.2**

EP 0 327 671 A2

Schnitt E - F

FIG.6

Schnitt A - B

FIG.4

Schnitt C - D

FIG.5

EP 0 327 671 A2

Schnitt E- F

FIG.9

Schnitt A - B

FIG.7

Schnitt C - D

FIG.8

Schnitt E - F

A→

Schnitt A - B

30'  58

13  10

2
8
3
17
7
1
16

4
11
5
20
6

D

C

14
15

12
9

B→

FIG.12

57

29'

30'

10
2
20
18
26
19
18
6
22
1
9

24,27
53
4
51
5
21
25
23
3

17

57

29'

FIG.10

Schnitt C - D

59
22

57

E

24,27

55

F

FIG.11

FIG.13